# EUROPÄISCHE PATENTSCHRIFT

(11) **EP 3 502 972 B1**
(45) Veröffentlichungstag und Bekanntmachung des Hinweises auf die Patenterteilung: **10.08.2022**
(21) Anmeldenummer: 18206919.5
(22) Anmeldetag: 19.11.2018
(51) Int. Cl.: G06K 19/077, G06K 19/07

(54) **PROZESSORCHIPKARTE UND VERFAHREN ZUM BETRIEB EINER PROZESSORCHIPKARTE**
PROCESSOR CHIP CARD AND METHOD FOR OPERATING SAME
CARTE À PUCE DE PROCESSEUR ET PROCÉDÉ DE FONCTIONNEMENT D'UNE CARTE À PUCE DE PROCESSEUR

(30) Priorität: 22.12.2017 DE 102017223687
(43) Veröffentlichungstag der Anmeldung: 26.06.2019
(73) Patentinhaber: Bundesdruckerei GmbH, 10969 Berlin (DE)
(72) Erfinder: Bastian, Paul, 10243 Berlin (DE); Kraus, Micha, 10827 Berlin (DE)
(74) Vertreter: Glawe, Delfs, Moll

(56) Entgegenhaltungen:
- EP-A2- 1 569 164
- US-A1- 2011 016 373

## Beschreibung

### Technisches Gebiet

Die vorliegende Erfindung betrifft eine Prozessorchipkarte und ein Verfahren zum Betrieb einer Prozessorchipkarte.

### Beschreibung des Standes der Technik

Aus dem Stand der Technik wie bspw. der DE 196 10 070 A1 sind Chipkarten (auch Smartcards genannt) für unterschiedliche Anwendungen wie Ausweisfunktion, Zutritt- bzw. Zugriffskontrolle, Zahlungsverkehr, Signaturfunktion, u.dgl. bekannt. Es finden sowohl kontaktbehaftete wie zunehmend kontaktlose Chipkarten Verwendung.

Eine neuere Entwicklung sieht vor, im Rahmen von multifunktionalen Chipkarten unterschiedliche Anwendungen auf eine Karte zu konzentrieren, so dass mit einer einzigen Karte logischer und/oder physischer Zutritt sowie Entschlüsselung und Signieren elektronischer Post oder elektronischer Dokumente, Zahlungsfunktion usw. realisiert werden können (z.B. "GoID"-Karte oder "neuer Betriebsausweis" (nBA) , beispielsweise wie in DE 10 2016 203 610 A1 beschrieben). Hierbei wird aus Gründen einer einfachen Verwendbarkeit der Karte eine Authentisierung des Nutzers (bspw. mittels PIN und/oder Fingerabdruck) für mehrere unterschiedliche Anwendungen verwendet, mit der Folge, dass mit einer Eingabe (ein- und derselben PIN oder eines Fingerabdrucks) sowohl ein physischer/logischer Zutritt als auch eine Verschlüsselung/Signatur durchgeführt werden können.

Auf derartigen Karten entsteht ein erhöhtes Kommunikationsvolumen, um die von einem Terminal kontaktlos gemäß einem Funk-Kommunikationsprotokoll (wie gemäß ISO14443) empfangenen Befehle und Daten intern auf der Karte über eine kontaktbehaftete Schnittstelle gemäß einem entsprechenden Kontakt-Kommunikationsprotokoll (wie gemäß ISO7816) an einen sicheren Mikrocontroller weiterzuleiten (und vice versa). Die Protokolle funktionieren blockbasiert, so dass lange Nachrichten in eine Reihe von kleinen Blöcken unterteilt werden (bspw. mit einer Länge von 256 Byte). Diese Blöcke umfassen neben den inhaltlichen "Nutzdaten" (Payload) begleitende Metadaten, die den Nutzdaten voran- und nachgestellt werden (Header/Trailer oder Prolog/Epilog). Ein Datenblock wird auch "Frame" genannt.

Typischerweise werden zunächst alle unter dem Funk-Kommunikationsprotokoll eingehenden Frames auf der Karte in einem Proxy oder Zwischenchip gesammelt (bis ein End-of-message-Byte eingeht) und in einem großen Buffer zusammengekettet, um anschließend in passende Frames unter dem Kontakt-Kommunikationsprotokoll umgewandelt und wieder in einzelne Blöcke aufgeteilt zu werden, die dann einzeln an den sicheren Mikrocontroller weitergeleitet werden. Dabei müssen die Nutzdaten jeweils von den Metadaten der einzelnen Protokolle getrennt werden.

Aus der DE 197 32 171 A1 ist ein Verfahren zum Betreiben eines Kommunikationsnetzes bekannt, bei dem gemäß einem ersten Protokoll definierte Datenrahmen verwendet werden, aus denen zur Übertragung gemäß einem zweiten Protokoll definierte Datenpakete erzeugt werden. Mit dem bekannten Verfahren wird ermöglicht, bereits vor Eintreffen sämtlicher Datenpakete wird ermöglicht, bereits vor Eintreffen sämtlicher Datenpakete des Datenrahmens mit dem Erzeugen der neuen Datenpakete zu beginnen.

Das Dokument US 2011/0016373 A1 betrifft die Transformation von Datenformaten bei einer Datenkommunikation zwischen einem Lese- /Schreibgerät und einer Smartcard. Es ist vorgesehen, Datenblöcke von einem ersten Protokollformat in ein zweites Protokollformat zu transformieren.

Das Dokuments EP 1 569 164 A2 ist unter anderem ebenfalls auf eine Smartcard gerichtet. Es werden unterschiedliche Verfahrensweisen bei der Datenverarbeitung im Falle von kontaktbasierter Kommunikation einerseits und kontaktloser Kommunikation andererseits beschrieben.

### Zusammenfassung der Erfindung

Ausgehend hiervon werden erfindungsgemäß eine Prozessorchipkarte mit den Merkmalen des Anspruchs 1 sowie ein Verfahren zum Betrieb einer Prozessorchipkarte mit den Merkmalen des Anspruchs 3 vorgeschlagen.

Die Erkenntnis der Erfindung liegt darin begründet, zum Erzielen einer möglichst effizienten Übertragung von Daten zwischen einem Funk-Kommunikationsprotokoll und einem Kontakt-Kommunikationsprotokoll möglichst wenige Kopieroperationen bei der Umwandlung der Datenblöcke von einem Protokoll in ein anderes Protokoll zu benutzen. Dies wird erfindungsgemäß dadurch erzielt, dass der maximale Umfang (d.h. die maximale Länge) der Nutzdaten eines Datenblocks für die Verwendung in jedem der Protokolle identisch gewählt ist. Damit wird erfindungsgemäß die Möglichkeit eröffnet, die Nutzdaten bei einem Übergang von einem der Protokolle zum anderen unverändert zu lassen und lediglich die Metadaten protokollgemäß zu ändern (umzuwandeln/zu übersetzen), d.h. die Metadaten den Vorgaben des Funk-Kommunikationsprotokolls und des Kontakt-Kommunikationsprotokolls entsprechend von einem der Kommunikationsprotokolle in das entsprechend andere Kommunikationsprotokoll umzuwandeln.

Gemäß einer Variante der Erfindung werden zunächst sämtliche Datenblöcke einer Datenübertragung gesammelt, bis der letzte Datenblock mit einer EOT- oder ETX-Meldung (End of Transmission bzw. End of Text) eingegangen ist, und erst dann werden die einzelnen Blöcke (Frames) von einem Protokoll in das entsprechend andere Protokoll umgewandelt, indem nur die Metadaten angepasst werden, woraufhin alle Datenblöcke nacheinander an den Adressaten weitergesendet werden.

Gemäß einer anderen Variante der Erfindung ist es möglich, die eingehenden Datenblöcke parallel zum Empfang weiterer Datenblöcke umzuwandeln und direkt unter dem anderen Protokoll weiterzuleiten, ohne dabei auf den kompletten Empfang der mehrere Datenblöcke umfassenden Nachricht zu warten.

Mit dem erfindungsgemäßen Vorgehen ist eine deutliche Geschwindigkeitssteigerung bei der Nachrichtenweiterleitung auf einer Prozessorchipkarte und damit einhergehend eine schnellere Nutzung der Anwendungen auf der Karte verbunden.

Die vorliegende Beschreibung deckt auch ein Computerprogramm mit Programmcode ab, der dazu geeignet ist, ein erfindungsgemäßes Verfahren auszuführen, wenn das Computerprogramm auf einer Prozessorchipkarte abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie sie in den Ansprüchen definiert ist, zu verlassen.

Die Erfindung ist anhand von Ausführungsbeispielen in den Zeichnungen schematisch dargestellt und wird im folgenden unter Bezugnahme auf die Zeichnungen ausführlich beschrieben.

### Kurzbeschreibung der Zeichnungen

Figur 1 zeigt in stark schematisierter Blockdarstellung eine erfindungsgemäße Prozessorchipkarte.

Figur 2 zeigt einen schematischen Prozessablauf gemäß der Erfindung.

### Ausführliche Beschreibung

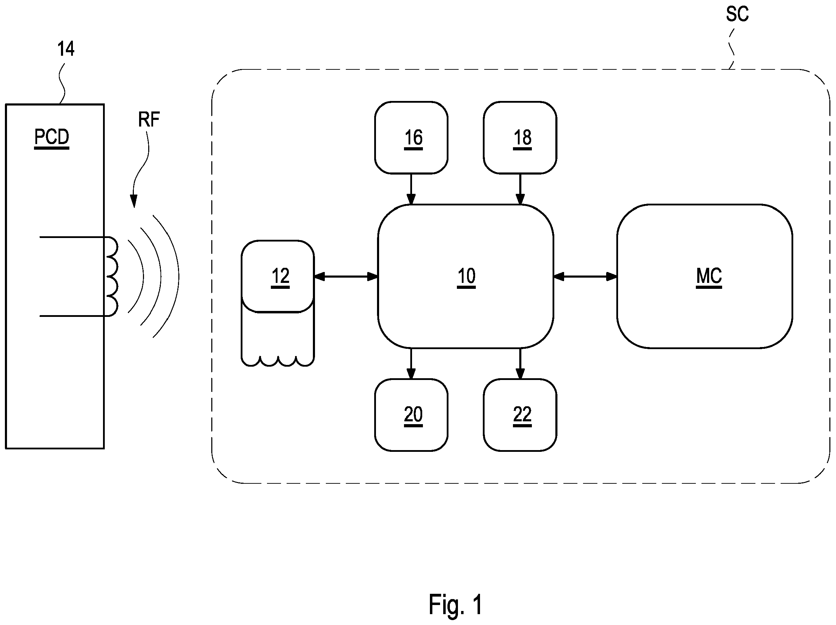

Figur 1 zeigt in stark schematisierter Blockdarstellung eine erfindungsgemäße Prozessorchipkarte oder Smartcard SC, im folgenden kurz als "Chipkarte" bezeichnet. Die Chipkarte SC ist als physikalische Einheit mit zwei in an sich bekannter Art und Weise integrierten Prozessoren oder Mikrokontrollern ausgebildet und umfasst einen (bspw. für kryptographische Anwendungen üblichen) sicheren Mikrocontroller MC und zusätzlich einen weiteren Mikrocontroller oder Zwischenchip 10, auch Proxy genannt.

Die beiden Mikrocontroller MC und 10 sind mittels einer nicht näher bezeichneten Datenleitung verbunden, die auf eine sichere Datenverbindung insbesondere im Sinne der ISO-Norm 7816 (genauer: ISO7816-3) ausgelegt sein kann. Die Datenübertragung erfolgt hier gemäß einem Kontakt-Kommunikationsprotokoll, wie es in kontaktbehafteten Chipkarten verwendet wird, um den sicheren Mikrokontroller anzusprechen. Soweit hierin Bezug auf die Erfindung genommen wird, ist mit der ISO-Norm 7816 insbesondere die ISO-Norm 7816 mit Stand vom 1. November 2016 gemeint.

Die Chipkarte SC umfasst des weiteren ein Koppelelement 12 zur kontaktlosen Datenübertragung mit einem externen Terminal oder Lesegerät 14 (PCD: Proximity Coupling Device), bspw. für eine Funkverbindung gemäß der ISO-Norm 14443 (genauer ISO14443-4). Soweit hierin Bezug auf die Erfindung genommen wird, ist mit der ISO-Norm 14443 insbesondere die ISO-Norm 14443 vom März 2016 gemeint.

Das Koppelelement 12 ist in dem dargestellten Ausführungsbeispiel mit dem Zwischenchip oder Proxy 10 verbunden. Die Datenübertragung erfolgt hier gemäß einem Funk-Kommunikationsprotokoll, so dass der gemäß dem Kontakt-Kommunikationsprotokoll angebundene sichere Mikrokontroller MC über eine drahtlose Zwischenstrecke von dem Terminal 14 angesprochen werden kann.

Die erfindungsgemäße Chipkarte SC kann des weiteren ein oder mehrere Eingabeelemente umfassen. In dem dargestellten Ausführungsbeispiel sind dies ein als Fingerabdrucksensor ausgebildetes erstes Eingabeelement 16 und ein als sogenanntes "PIN-Pad" ausgebildetes zweites Eingabeelement 18. Das bzw. die Eingabeelemente können - wie dargestellt - mit dem Zwischenchip oder Proxy 10 verbunden sein.

Entsprechend kann die Chipkarte SC ein oder mehrere Ausgabeelemente umfassen, bei denen es sich um ein optisches Ausgabeelement 20 (wie eine Anzeigeeinheit) und/oder ein akustisches Ausgabeelement 22 (wie einen Lautsprecher) handeln kann. Das bzw. die Ausgabeelemente können - wie dargestelltmit dem Zwischenchip 10 verbunden sein.

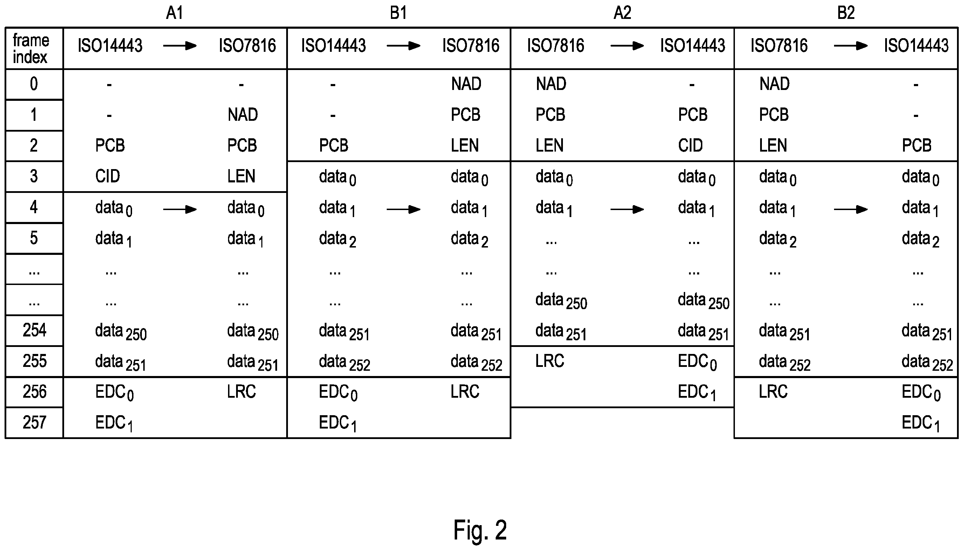

Figur 2 veranschaulicht das erfindungsgemäße Vorgehen bei der Umwandlung von Datenpaketen bzw. Datenblöcken von einem Funk-Kommunikationsprotokoll in ein Kontakt-Kommunikationsprotokoll und zurück.

Im Betrieb der erfindungsgemäßen Prozessorchipkarte SC erfolgt zunächst eine Datenübertragung über die kontaktlose Schnittstelle RF/12 von dem Lesegerät 14/PCD an den Zwischenchip 10. Diese Datenübertragung erfolgt unter einem Funk-Kommunikationsprotokoll gemäß der Norm ISO14443 und wird zur Weiterleitung von dem Zwischenchip 10 an den sicheren Mikrocontroller MC in ein Kontakt-Kommunikationsprotokoll gemäß der Norm ISO7816 umgewandelt/übersetzt.

In der Figur 2 ist in der linken Spalte "frame index" die Nummerierung der einzelnen Datenblockfelder/Bytes von 0 bis 257 wiedergegeben. In der rechts davon liegenden Spalte A1 ist links die Struktur eines Datenblocks gemäß Funk-Kommunikationsprotokoll ISO14443 im Falle der Verwendung eines Kartenidentifizierers CID wiedergegeben, während die weiter rechts liegende Spalte B1 die Datenblock-Struktur ohne Verwendung eines Kartenidentifizierers wiedergibt. Die Länge des Feldes ist so gewählt, dass das Maximum der möglichen Daten von ISO7816-3 (INF=0 bis 254) und ISO14443-4(INF=Framesize-(Prolog + Epilog) = 252 für Framesize 256) erreicht wird. Insbesondere beim Aufbau der Kommunikationsverbindung von ISO14443 und ISO7816 müssen die Parameter vom Zwischenchip 10 genau so gewählt werden, dass die Datenlängen identisch sind.

Der Aufbau des Datenblocks entspricht einem dem Fachmann an und für sich bekannten Format. Das Prolog-Feld umfasst die Rahmenfelder 0 bis 3, wobei die ersten beiden Felder Leerfelder sind und in Feld 2 ein Protokollkontrollbyte PCB und in Feld 3 der Kartenidentifizierer CID eingetragen sind. Daran schließen sich in den Rahmenfeldern 4 bis 255 die Einträge der Nutzdaten (Payload) data₀, data₁, ... data₂₅₀, data₂₅₁ an. Das Ende des Datenblocks bildet das Epilogfeld, in dem lediglich Fehlererkennungscodes EDC₀ und EDC₁ enthalten sind. In dem in der Spalte B1 dargestellten Fall ohne Verwendung eines Kartenidentifizierers "rutscht" der Beginn der Nutzdaten-Folge nach vorne auf das Rahmenfeld 3, mit dem Ergebnis, dass die Nutzdaten hier insgesamt ein Feld mehr belegen können (bis Eintrag data₂₅₂ in Feld 255). Das Epilogfeld bleibt gegenüber der Spalte A1 unverändert.

Bei der Übertragung bzw. Umwandlung des über das Funk-Kommunikationsprotokoll eingegangenen Datenblocks in einen Datenblock gemäß Kontakt-Kommunikationsprotokoll werden erfindungsgemäß die Metadaten im Prologfeld und im Epilogfeld übersetzt, wie dies im rechten Teil der Spalte A1 bzw. der Spalte B1 wiedergegeben ist. Das Prologfeld gemäß Kontakt-Kommunikationsprotokoll ISO7816 umfasst zunächst ein Leerfeld 0, an das sich in den Feldern 1 bis 3 die Einträge NAD (Knotenadresse), PCB (Protokollkontrollbyte) und LEN (Länge) anschließen. Wie im Ausgangsdatenblock ISO14443 schließen sich in den Feldern 4 bis 254 die erfindungsgemäß unveränderten Nutzdaten data₀, data₁, ... data₂₅₀, data₂₅₁ an, gefolgt von dem Epilog fällt mit einem Eintrag LRC (longitudinal redundancy check: Längsparitätsprüfung) in dem letzten Rahmenfeld 256. Die beschriebenen Einträge und die entsprechenden Umwandlungen zwischen den Protokollen in den Prolog- und Epilogfeldern sind dem Fachmann geläufig.

Wie aus der Darstellung der Figur 2 in Spalte A1 hervorgeht, können die Nutzdaten der Rahmenfelder 4 bis 255 identisch übernommen werden; diese müssen somit einfach nur "weitergeschoben" werden. Damit dies funktioniert, ist der maximale Umfang der Nutzdaten eines Datenblocks erfindungsgemäß in den beiden Protokollen identisch gewählt. Die Zahl der diesem Umfang entsprechenden Felder bestimmt sich aus dem Protokoll mit dem kleineren maximalen Umfang, was vorliegend das Kontakt-Kommunikationsprotokoll ISO7816 ist, das einen maximalen Gesamtumfang von seiner 257 Feldern (257 Byte) hat. Da in Abhängigkeit von der Verwendung eines Kartenidentifizierers 4 bzw. 5 Byte (Spalte B1 bzw. Spalte A1) für die Metadaten (einschl. Leerfelder) zu reservieren sind, folgt daraus, dass der maximale Umfang der Nutzdaten 252 Byte (Spalte A1, mit CID) bzw. 253 Byte (Spalte B1, ohne CID) beträgt.

In den Spalten A2 und B2 der Figur 2 ist die entsprechende Rückübertragung von dem Kontakt-Kommunikationsprotokoll in das Funk-Kommunikationsprotokoll veranschaulicht.

Die Erfindung ermöglicht somit eine effiziente, schnelle Übertragung von Daten zwischen Funk- und Kontakt-Kommunikationsprotokollen in der Kommunikation von Prozessorchipkarten mit einem Terminal unter Vermeidung von Kopieroperationen und stellt eine effiziente blockbasierte Proxy-Architektur unter ISO14443-4 und ISO7816-3 dar.

## Patentansprüche

1. Prozessorchipkarte (SC) mit einem sicheren Mikrocontroller (MC) und einem Zwischenchip (10), der dazu ausgebildet ist, über eine kontaktlose Schnittstelle (RF, 12) Daten in Datenblöcken gemäß einem Funk-Kommunikationsprotokoll zu empfangen und zu senden sowie Daten innerhalb der Prozessorchipkarte (SC) mit dem sicheren Mikrocontroller (MC) in Datenblöcken gemäß einem Kontakt-Kommunikationsprotokoll zu übertragen, wobei die Datenblöcke gemäß dem Funk-Kommunikationsprotokoll und gemäß dem Kontakt-Kommunikationsprotokoll jeweils Nutzdaten umfassen, wobei der Zwischenchip (10) derart konfiguriert ist, dass der maximale Umfang der Nutzdaten eines Datenblocks in dem Funk-Kommunikationsprotokoll und dem Kontakt-Kommunikationsprotokoll identisch ist,
**dadurch gekennzeichnet, dass** entweder die Prozessorchipkarte (SC) dazu ausgebildet ist, alle Datenblöcke einer in dem Zwischenchip (10) eingehenden Datenübertragung unter einem Kommunikationsprotokoll zu sammeln, und bei der der Zwischenchip dazu konfiguriert ist, nach dem Eingehen des letzten Datenblocks der eingehenden Datenübertragung die Metadaten jedes gesammelten Datenblocks in das entsprechend andere Kommunikationsprotokoll umzuwandeln und die umgewandelten Datenblöcke zu senden,
oder dass der Zwischenchip (10) dazu konfiguriert ist, die Metadaten eines in dem Zwischenchip (10) eingehenden Datenblocks einer Datenübertragung unter einem Kommunikationsprotokoll parallel zum Empfang weiterer Datenblöcke in das entsprechend andere Kommunikationsprotokoll umzuwandeln und den umgewandelten Datenblock weiterzusenden, ohne das Ende der Datenübertragung abzuwarten.

2. Prozessorchipkarte (SC) nach Anspruch 1, deren Zwischenchip dazu ausgebildet ist, beim Übergang zwischen dem Funk-Kommunikationsprotokoll und dem Kontakt-Kommunikationsprotokoll die Nutzdaten eines Datenblocks unverändert zu lassen und nur die Metadaten protokollgemäß umzuwandeln.

3. Verfahren zum Betrieb einer Prozessorchipkarte (SC), bei dem über eine kontaktlose Schnittstelle (RF, 12) Daten in Datenblöcken gemäß einem Funk-Kommunikationsprotokoll empfangen und gesendet werden und Daten innerhalb der Prozessorchipkarte (SC) in Datenblöcken gemäß einem Kontakt-Kommunikationsprotokoll übertragen werden, wobei die Datenblöcke gemäß dem Funk-Kommunikationsprotokoll und gemäß dem Kontakt-Kommunikationsprotokoll jeweils Nutzdaten umfassen, und wobei die beiden Protokolle derart konfiguriert sind, dass der maximale Umfang der Nutzdaten eines Datenblocks in beiden Protokollen identisch ist,
**dadurch gekennzeichnet, dass** alle Datenblöcke einer eingehenden Datenübertragung unter einem Kommunikationsprotokoll gesammelt werden, bis der letzte Datenblock der Datenübertragung eingegangen ist, um anschließend die Metadaten jedes Datenblocks in das entsprechend andere Kommunikationsprotokoll umzuwandeln und die umgewandelten Datenblöcke unter dem jeweils anderen Kommunikationsprotokoll zu senden,
oder dass die Metadaten eines eingehenden Datenblocks einer Datenübertragung unter einem Kommunikationsprotokoll in das entsprechend andere Kommunikationsprotokoll umgewandelt werden und der umgewandelte Datenblock weitergesendet wird, während ein weiterer eingehender Datenblock empfangen wird.

4. Verfahren nach Anspruch 3, bei dem beim Übergang zwischen dem Funk-Kommunikationsprotokoll und dem Kontakt-Kommunikationsprotokoll die Nutzdaten eines Datenblocks unverändert bleiben und nur die Metadaten protokollgemäß umgewandelt werden.

5. Computerprogramm mit Programmcodemitteln, um alle Schritte eines Verfahrens nach einem der Ansprüche 3 bis 4 durchzuführen, wenn das Computerprogramm auf einer Prozessorchipkarte (SC) ausgeführt wird.

## Claims

1. Processor chip card (SC) having a secure microcontroller (MC) and an intermediate chip (10) which is designed to receive and to send data in data blocks via a contactless interface (RF, 12) in accordance with a radio communication protocol and to transmit data within the processor chip card (SC) having the secure microcontroller (MC) in data blocks in accordance with a contact communication protocol, wherein the data blocks each comprise useful data in accordance with the radio communication protocol and in accordance with the contact communication protocol, wherein the intermediate chip (10) is configured in such a way that the maximum volume of useful data of a data block in the radio communication protocol and the contact communication protocol is identical,
**characterized in that** either the processor chip card (SC) is designed to collect all data blocks of a data transmission entering the intermediate chip (10) under a communication protocol and in which the intermediate chip is configured, after the last data block of the incoming data transmission has entered, to convert the metadata of each collected data block into the corresponding other communication protocol and to send the converted data blocks,
or **in that** the intermediate chip (10) is configured to convert the metadata of a data block of a data transmission entering the intermediate chip (10) under a communication protocol into the corresponding other communication protocol in parallel with the reception of other data blocks and to pass on the converted data block without waiting for the end of the data transmission.

2. Processor chip card (SC) according to Claim 1, the intermediate chip of which is designed to leave the useful data of a data block unchanged and to convert only the metadata in accordance with protocol when there is a transition between the radio communication protocol and the contact communication protocol.

3. Method for operating a processor chip card (SC) in which data are received and sent in data blocks via a contactless interface (RF, 12) in accordance with a radio communication protocol and data within the processor chip card (SC) are transmitted in data blocks in accordance with a contact communication protocol, wherein the data blocks each comprise useful data in accordance with the radio communication protocol and in accordance with the contact communication protocol, and wherein the two protocols are configured in such a way that the maximum volume of useful data of a data block in both protocols is identical,
**characterized in that** all data blocks of an incoming data transmission are collected under a communication protocol until the last data block of the data transmission has entered in order to subsequently convert the metadata of each data block into the corresponding other communication protocol and to send the converted data blocks under the respective other communication protocol, or **in that** the metadata of an incoming data block of a data transmission are converted under a communication protocol into the corresponding other communication protocol and the converted data block is passed on while another incoming data block is received.

4. Method according to Claim 3, in which the useful data of a data block remain unchanged and only the metadata are converted in accordance with protocol when there is a transition between the radio communication protocol and the contact communication protocol.

5. Computer program comprising program code means for carrying out all steps of a method according to any one of Claims 3 to 4 when the computer program is executed on a processor chip card (SC).

## Revendications

1. Carte à puce de processeur (SC) comprenant un microcontrôleur sécurisé (MC) et une puce intermédiaire (10) qui est conçue pour recevoir et envoyer des données dans des blocs de données selon un protocole de communication par radio par l'intermédiaire d'une interface sans contact (RF, 12) et pour transmettre des données dans des blocs de données selon un protocole de communication par contact à l'intérieur de la carte à puce de processeur (SC) comprenant le microcontrôleur sécurisé (MC),
les blocs de données selon le protocole de communication par radio et selon le protocole de communication par contact comprenant chacun des données utiles,
la puce intermédiaire (10) étant configurée de manière à ce que l'étendue maximale des données utiles d'un bloc de données soit identique dans le protocole de communication par radio et dans le protocole de communication par contact,
**caractérisée en ce que**
soit la carte à puce de processeur (SC) est réalisée pour collecter tous les blocs de données d'une transmission de données entrante sous un protocole de communication dans la puce intermédiaire (10), la puce intermédiaire étant configurée pour, après l'entrée du dernier bloc de données de la transmission de données entrante, convertir en l'autre protocole de communication correspondant les métadonnées de chaque bloc de données collecté, et pour envoyer les blocs de données convertis,
soit la puce intermédiaire (10) est configurée pour convertir en l'autre protocole de données correspondant les métadonnées d'un bloc de données entrant dans la puce intermédiaire (10) d'une transmission de données sous un protocole de communication, parallèlement à la réception d'autres blocs de données, et pour retransmettre le bloc de données converti sans attendre la fin de la transmission de données.

2. Carte à puce de processeur (SC) selon la revendication 1, dont la puce intermédiaire est réalisée pour laisser inchangées les données utiles d'un bloc de données lors de la transition entre le protocole de communication par radio et le protocole de communication par contact, et pour ne convertir que les métadonnées conformément au protocole.

3. Procédé d'exploitation d'une carte à puce de processeur (SC), dans lequel des données sont reçues et envoyées dans des blocs de données selon un protocole de communication par radio par l'intermédiaire d'une interface sans contact (RF, 12), et des données sont transmises dans des blocs de données selon un protocole de communication par contact à l'intérieur de la carte à puce de processeur (SC), les blocs de données selon le protocole de communication par radio et selon le protocole de communication par contact comprenant chacun des données utiles, et les deux protocoles étant configurés de telle sorte que l'étendue maximale des données utiles d'un bloc de données est identique dans les deux protocoles,
**caractérisé en ce que**
tous les blocs de données d'une transmission de données entrante sous un protocole de communication sont collectés jusqu'à ce que le dernier bloc de données de la transmission de données soit entré, pour ensuite convertir en l'autre protocole de communication correspondant les métadonnées de chaque bloc de données et pour envoyer les blocs de données convertis sous l'autre protocole de communication respectif,
ou bien les métadonnées d'un bloc de données entrant d'une transmission de données sous un protocole de communication sont converties en l'autre protocole de communication correspondant, et le bloc de données converti est retransmis pendant qu'un autre bloc de données entrant est en cours de réception.

4. Procédé selon la revendication 3, dans lequel, lors de la transition entre le protocole de communication par radio et le protocole de communication par contact, les données utiles d'un bloc de données restent inchangées et seules les métadonnées sont converties conformément au protocole.

5. Programme informatique comprenant des moyens de codage de programme pour exécuter toutes les étapes d'un procédé selon l'une des revendications 3 à 4, lorsque le programme informatique est exécuté sur une carte à puce de processeur (SC).
